# EUROPÄISCHE PATENTSCHRIFT

(11) **EP 0 797 086 B1**
(45) Veröffentlichungstag und Bekanntmachung des Hinweises auf die Patenterteilung: **02.11.2005**
(21) Anmeldenummer: 97104749.3
(22) Anmeldetag: 20.03.1997
(51) Int. Cl.: G01M 1/32, G01M 1/04

(54) **System zum Auswuchten eines Kfz-Rades**
System for balancing a vehicle wheel
Système d'équilibrage d'un pneu de véhicule

(30) Priorität: 23.03.1996 DE 19611574
(43) Veröffentlichungstag der Anmeldung: 24.09.1997
(73) Patentinhaber: Continental Aktiengesellschaft, 30165 Hannover (DE)
(72) Erfinder: Bremer, Torsten, Dr., 31275 Lehrte (DE)

(56) Entgegenhaltungen:
- EP-A- 0 557 240
- DE-A- 2 321 437
- US-A- 2 201 982

## Beschreibung

Die Erfindung betrifft ein System zum "industriellen Auswuchten" insbesondere größerer Serien von Kraftfahrzeugrädern, bei dem eine Unwucht in zwei Ebenen des Rades ermittelt und durch das Befestigen mindestens eines Ausgleichgewichts in jeder der beiden Ebenen ausgeglichen wird, bestehend zumindest aus einer Wuchtmaschine zur Ermittlung und Markierung der Unwuchten und einer Vorrichtung mit einer Halterung, die mit der Wuchtmaschine über eine Förderstrecke verbunden ist und in der das jeweilige Kraftfahrzeugrad nach Ermittlung und Markierung der Unwuchten zum Befestigen eines Ausgleichgewichtes in einer vertikalen Lage positionierbar ist. Die Erfindung betrifft ferner ein Verfahren zum Auswuchten eines Kraftfahrzeugrades.

Derartige Systeme zum industriellen Auswuchten von Kraftfahrzeugrädern sind, z.B. aus der deutschen Patentschrift DE1084494, seit langem bekannt und bestehen üblicherweise aus einer Wuchtmaschine zur Ermittlung und Markierung der Unwuchten und einer Vorrichtung mit einer Halterung, in der das Kraftfahrzeugrad zum Befestigen von Ausgleichgewichten in einer vertikalen Lage positioniert wird, wobei die Wuchtmaschine und die Vorrichtung durch eine Förderstrecke miteinander verbunden sein können. Es werden unterschiedliche Typen von Ausgleichgewichten zur Beseitung von Unwuchten an Kraftfahrzeugrädern verwendet. So werden beispielsweise einteilige Schlaggewichte zwischen Reifen und Felge eingeschlagen oder mehrteilige Klammergewichte zwischen Reifen und Felge eingeklammert. Insbesondere bei höherwertigen Radausführungen werden aus optischen und technischen Erwägungen vermehrt auch Klebegewichte verwendet, die an den markierten Positionen in den Ausgleichebenen festgeklebt werden. In Abhängikeit davon, welche Typen von Ausgleichgewichten verwendet werden, ist die Vorrichtung zum Befestigen der Ausgleichgewichte unterschiedlich ausgebildet.

So besteht eine übliche Vorrichtung zum Befestigen der Ausgleichgewichte bei Verwendung von Schlag- oder Klammergewichten aus einer Radmulde, in die das Kraftfahrzeugrad von der Förderstrecke "hineinfällt" und eine vertikale Position einnimmt. In dieser Position wird von einem Bediener in der Radaußenfläche (erste Ebene) und in der Radinnenfläche (zweite Ebene) jeweils ein Ausgleichgewicht befestigt. Aufgrund der vertikalen Position des Kraftfahrzeugrades ist ein exakt positioniertes Einschlagen bzw. Einklammern der Ausgleichgewichte möglich.

Bei der Verwendung von Klebegewichten wird das horizontal auf der Förderstrecke beispielsweise mit der Radaußenfläche nach oben liegende Kraftfahrzeugrad zu dem Bediener transportiert und dort angehalten, so daß der Bediener das erste Klebegewicht in der ersten Ebene festkleben kann, sofern diese von der Radaußenseite zugänglich ist. Danach wird das Kraftfahrzeugrad mit Hilfe eines Radwenders, der beispielsweise aus einer Art Greifarm besteht, gewendet, so daß das Kraftfahrzeugrad wiederum eine horizontale Lage einnimmt, nunmehr jedoch die Radinnenfläche dem Bediener zugewandt ist und die zweite Ausgleichebene zur Befestigung des zweiten Klebegewichts von der Radinnenseite her zugänglich ist (ein derartiges Umschlagen einer in einer horizontalen Position befindlichen Rades ist z.B. aus der DE-OS 1698628 bekannt). Ein präzises Festkleben der Klebegewichte an einer vorgegebenen Position in den Ebenen ist aufgrund der horizontalen Lage des Kraftfahrzeugrades einfach möglich. Insbesondere sind aufgrund der horizontalen Lage Ausgleichebenen einfach zugänglich, die zwischen der Radaußenfläche und der Radinnenfläche liegen.

Aus der deutschen Offenlegungsschrift DE-OS2321437 ist eine Vorrichtung zum Auswuchten von Unwuchtkörpern, insbesondere Fahrzeugrädern, bekannt. Diese Vorrichtung weist eine drehbare Aufspannwelle, welche an mehreren Lagerstellen, an denen Messwertaufnehmer vorgesehen sind, auf. Die Unwucht wird in einer vertikalen Lage der Aufspannwelle in zwei Ausgleichsebenen ermittelt und ausgeglichen. Die Aufspannwelle ist zwischen einer horizontalen und einer vertikalen Lage schwenkbar ausgebildet. Die horizontale Lage der Aufspannwelle wird zum einfachen und sicheren Aufspannen des Rades verwendet. Es werden ausschließlich Schlaggewichte zum Ausgleich der jeweiligen Unwucht in der horizontalen Lage eingesetzt.

Die europäische Patentanmeldung EP0557240A2 beschreibt eine Vorrichtung zum Auswuchten von Rädern, welche eine von einer horizontalen in eine vertikale Lage schwenkbare Aufnahmeachse aufweist. Die Aufnahmeachse wird zur Befestigung und zum Lösen der jeweiligen Räder in die horizontale Lage gebracht. In der vertikalen Lage der Aufnahmeachse wird der Messvorgang für die Ermittlung und Markierung der Unwucht des Rades vorgenommen.

Die US-Patentschrift US2201982 offenbart eine Montage-/Demontage- sowie eine Unwuchtausgleichs-Vorrichtung für Räder. Die Montage/Demontage und die Ermittlung und Markierung der Unwucht der jeweiligen Räder wird in der horizontalen Lage der Aufnahmeachse der Vorrichtung und der Rotationsachse des Rades durchgeführt.

Die obigen Ausführungen zeigen, daß die bekannten Vorrichtungen zur Befestigung von Ausgleichgewichten besunders gut an die Verwendung bestimmter Ausgleichgewichte angepaßt sind. In jüngster Zeit ist jedoch ein Trend erkennbar, gemäß dem Schlaggewichte bzw. Klammergewichte in Kombination mit Klebegewichten verwendet werden. Für eine derartige Kombination sind die oben erläuterten Vorrichtungen wenig geeignet, da sie speziell für die Verwendung von Schlagbzw. Klammergewichten oder speziell für die Verwendung von Klebegewichten ausgebildet sind.

Der Erfindung liegt die Aufgabe zugrunde, ein System zum Auswuchten eines Kraftfahrzeugrades zu schaffen, mit dem auf besonders einfache Art und weise auch Kraftfahrzeugräder ausgewuchtet werden können, bei denen sämtliche marktgängigen Ausgleichgewichte sortenrein oder in beliebiger Kombination verwendet werden sollen. Gemäß den kennzeichnenden Merkmalen des Anspruchs 1 wird bei einem System der eingangs genannten Art die Aufgabe dadurch gelöst, daß die Halterung der Vorrichtung um 90° schwenkbar ist, so daß das in der Halterung befindliche Kraftfahrzeugrad zum Befestigen eines Ausgleichgewichtes von Lage auch in eine horizontale Lage schwenkbar ist.

Der Grundgedanke der Erfindung ist darin zu sehen, daß das Kraftfahrzeugrad nach der Bestimmung der Unwuchten in einer Wuchtmaschine einer Vorrichtung zugeführt wird, in der das Kraftfahrzeugrad sowohl vertikal als auch horizontal positionierbar ist, wobei beide Positionierungen "gleichberechtigt" sind. Somit wird man unabhängig von den verwendeten Ausgleichgewichten.

Die Vorteile der Erfindung sind darin zu sehen, daß das erfindungsgemäße System besonders vielseitig einsetzbar ist und Ausgleichgewichte beliebiger Arten sowohl einzeln als auch in beliebigen Kombinationen miteinander verwendbar sind. Ein weiterer Vorteil der Erfindung ist darin zu sehen, daß die Vorrichtung zur Befestigung der Ausgleichelemente zwei Vorrichtungen in sich vereinigt und somit wesentlich kompakter ist als eine "Hintereinanderschaltung" der beiden Vorrichtungen, so daß das gesamte System wenig Raum einnimmt. Aufgrund des kompakten Aufbaus der Vorrichtung ist es möglich, daß der Bediener während der Befestigung der Ausgleichgewichte immer die gleiche Arbeitsposition einnehmen kann. Schließlich können bestehende Vorrichtungen zumeist auf einfache Art und Weise auf die erfindungsgemäße Vorrichtung umgerüstet werden.

Ein Ausführungsbeispiel und weitere Vorteile der Erfindung werden im Zusammenhang mit der nachstehenden Figur erläutert, die ein System zum Auswuchten eines Kraftfahrzeugrades zeigt.

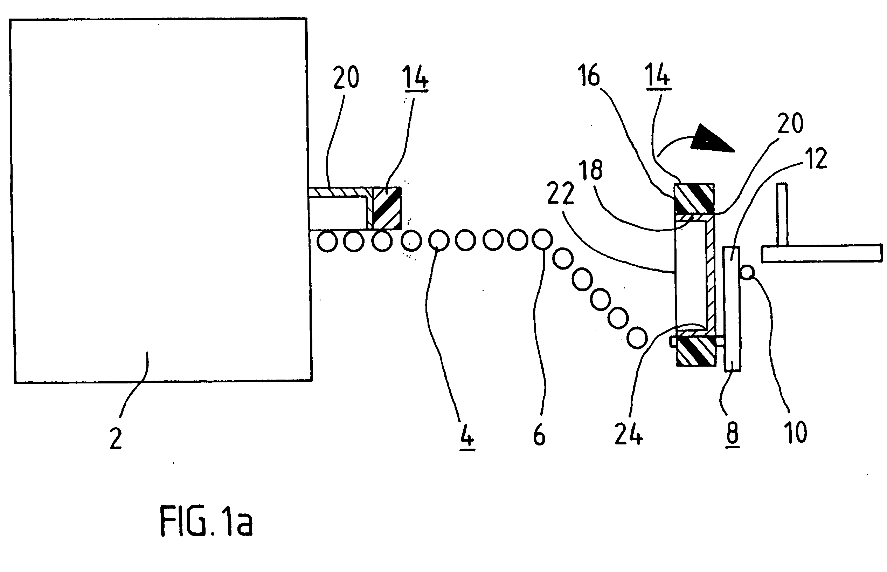

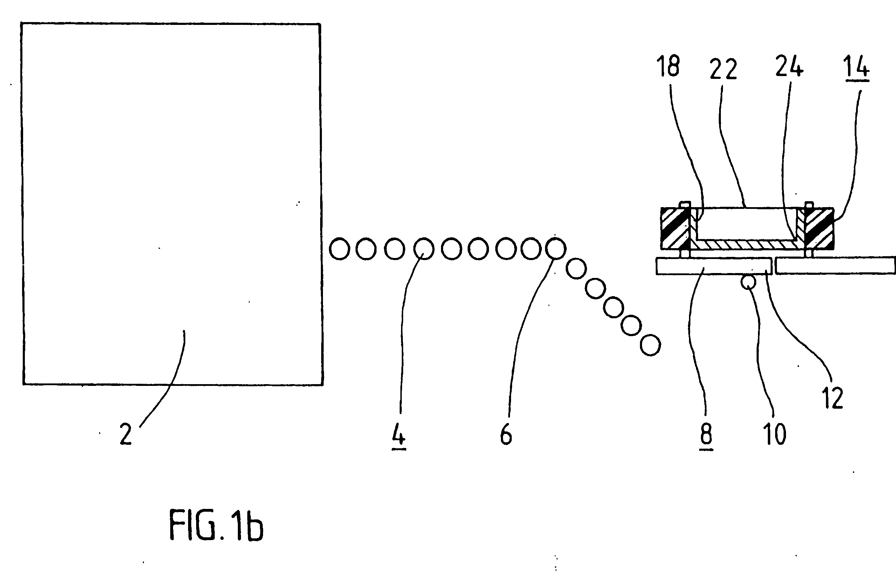

Fig. 1 zeigt in schematischer Darstellung ein System zum Auswuchten eines Kraftfahrzeugrades von der Seite, bestehend aus einer Wuchtmaschine 2, einer Förderstrecke 4 und einer an sich bekannten Radmulde B. In der Wuchtmaschine 2 werden die Unwuchten eines Kraftfahrzeugrades in zwei Ebenen gemessen und diejenigen Stellen auf dem Kraftfahrzeugrad markiert, an denen Ausgleichsgewichte anzubringen sind. Derartige Wuchtmaschinen 2 sind aus dem Stand der Technik bekannt, so daß sie hier nicht näher beschrieben werden sollen. Nach Bestimmung der Unwuchten in der Wuchtmaschine 2 wird das Kraftfahrzeugrad 14 derartig auf eine Förderstrecke 4 gelegt, daß die Radaußenfläche 20 des Kraftfahrzeugrades 14 von der Förderstrecke 4 wegweist (siehe Fig. la; man beachte, daß das Kraftfahrzeugrad 14 im Querschnitt dargestellt ist). Durch den Antrieb der Förderrollen 6 wird das Kraftfahrzeugrad 14 in Richtung einer Radmulde 8 transportiert. Das Kraftfahrzeugrad 14 fällt derart in die Radmulde 8, daß es eine vertikale Position in der Halterung 12 der Radmulde 8 einnimmt, wobei die Radaußenfläche 20 des Kraftfahrzeugrades 14 von der Wuchtmaschine 2 abgewandt ist. In dieser vertikalen Position wird beispielsweise von einem Bediener ein erstes Ausgleichgewicht in die erste Ebene, die durch die Radaußenfläche 20 gebildet wird, zwischen den Reifen 16 und der Felge 18 des Kraftfahrzeugrades 14 eingeschlagen bzw. geklammert.

Fig. 1a ist zu entnehmen, daß einem Bediener die Radaußenfläche 20 und die Radinnenfläche 22 in der vertikalen Position des Kraftfahrzeugrades 14 zum Anbringen von Ausgleichgewichten besonders gut zugänglich ist (insbesondere ist ein Einschlagen von Schlaggewichten besonders präzise und schnell möglich.) Häufig ist es jedoch vorgesehen, wenigstens ein Klebegewicht in der Felgenschüssel 24 der Felge 18 des Kraftfahrzeugrades 14 anzubringen, also in einer Ebene, die zwischen der Radaußenfläche 20 und der Radinnenfläche 22 und somit im "Innern" des Kraftfahrzeugrades 14 liegt. Diese Ebene ist in der Fig. 1a gezeigten vertikalen Position des Kraftfahrzeugrades 14 nur schwierig zugänglich und ein exaktes Positionieren von Klebegewichten ist praktisch unmöglich (auch hier beachte man, daß das Kraftfahrzeugrad 14 im Querschnitt dargestellt ist und die Fig. 1a deshalb täuscht; in Wirklichkeit sieht der Bediener nur den Reifen 16 vor sich und könnte nur von der linken Seite ohne Sicht in die Felgenschüssel 24 greifen, um dort ein Klebegewicht zu positionieren).

Aus diesem Grunde wird die Halterung 12 der Radmulde 8 um die Achse 10 - vorzugsweise durch einen maschinellen Antrieb - um 90' geschwenkt, so daß die Halterung 12 der Radmulde 8 die in der Fig. 1b gezeigte Position einnimmt und das Kraftfahrzeugrad 14 in eine horizontale Lage überführt wird, wobei die Radinnenfläche 22 von der Radmulde 8 wegweist. In dieser horizontalen Lage ist die Felgenschüssel 24 der Felge 18 des Kraftfahrzeugrades 14 für einen Bediener sichtbar und gut zugänglich, so daß ein Klebegewicht in einer exakten Position in der Felgenschüssel 24 befestigt werden kann.

Nach Befestigung der Ausgleichgewichte an dem Kraftfahrzeugrad 14 in der Radmulde 8 wird das Kraftfahrzeugrad 14 in die Mulde zurückgeschwenkt und anschließend in bekannter Art und Weise aus der Radmulde 8 "ausgeworfen" und weiter verarbeitet.

### Bezugszeichenliste

- 2: Wuchtmaschine
- 4: Förderstrecke
- 8: Radmulde
- 10: Achse
- 12: Halterung
- 14: Kraftfahrzeugrad
- 16: Reifen
- 18: Felge
- 20: Radaußenfläche
- 22: Radinnenfläche
- 24: Felgenschüssel

## Patentansprüche

1. System zum industriellen Auswuchten insbesondere größerer Serien von Kraftfahrzeugrädern, bei denen eine Unwucht in zwei Ebenen ermittelt und durch das Befestigen mindestens eines Ausgleichgewichtes in jeder der beiden Ebenen ausgeglichen wird, bestehend zumindest aus einer Wuchtmaschine zur Ermittlung und Markierung der Unwuchten und einer Vorrichtung mit einer Halterung, die mit der Wuchtmaschine über eine Förderstrecke verbunden ist und in der das jeweilige Kraftfahrzeugrad nach Ermittlung und Markierung der Unwuchten zum Befestigen eines Ausgleichgewichtes in einer vertikalen Lage postionierbar ist, wobei die Halterung (12) der Vorrichtung (8) um 90° schwenkbar ist, so daß das in der Halterung (12) befindliche Kraftfahrzeugrad (14) zum Befestigen eines weiteren Ausgleichgewichtes von der vertikalen Lage auch in eine horizontale Lage schwenkbar ist.

## Claims

1. System for industrially balancing in particular relatively large series of motor vehicle wheels in which an unbalance is determined in two planes and is compensated in each of the two planes by attaching at least one balancing weight, composed at least of one balancing machine for determining and marking the unbalances and one device having a securing means which is connected to the balancing machine by means of a conveyor belt and in which the respective motor vehicle wheel can be positioned in a vertical position, after the unbalances have been determined and marked, in order to attach a compensating weight, the securing means (12) of the device (8) being pivotable through 90° so that the motor vehicle wheel (14) which is located in the securing means (12) can also be pivoted from the vertical position into a horizontal position in order to attach a further compensating weight.

## Revendications

1. Système d'équilibrage industriel notamment pour grandes séries de roues de véhicules automobiles, dans lesquelles un déséquilibre dans deux plans est détecté et est compensé par la fixation d'au moins un poids d'équilibrage dans chacun des deux plans, se composant d'au moins une machine d'équilibrage pour détecter et marquer le déséquilibre et d'un dispositif comprenant un support, qui est connecté à la machine d'équilibrage par le biais d'une ligne de transport et dans lequel la roue de véhicule automobile respective, après la détection et le marquage du déséquilibre, peut être positionnée dans une position verticale pour la fixation d'un poids d'équilibrage, le support (12) du dispositif (8) pouvant pivoter de 90° de sorte que la roue du véhicule automobile (14) se trouvant dans le support (12) puisse être aussi pivotée de la position verticale dans une position horizontale pour la fixation d'un autre poids d'équilibrage.
